# EUROPÄISCHE PATENTSCHRIFT

(11) **EP 2 141 761 B1**
(45) Veröffentlichungstag und Bekanntmachung des Hinweises auf die Patenterteilung: **19.10.2011**
(21) Anmeldenummer: 09159667.6
(22) Anmeldetag: 07.05.2009
(51) Int. Cl.: H01M 8/04

(54) **Anodengaskreislauf eines Brennstoffzellensystems und Verfahren zum Einschalten und Abschalten eines derartigen Anordengaskreislaufs eines Brennstoffzellensystems**
Anode gas circuit of a fuel cell system and method for starting and stopping the anode gas circulation of a fuel cell system
Circuit de gaz anodique d'un système de pile à combustible et procédé de demarrer et d'arrêter la circulation de gaz anodique d'un système de pile à combustible

(30) Priorität: 02.07.2008 DE 102008031280
(43) Veröffentlichungstag der Anmeldung: 06.01.2010
(73) Patentinhaber: Pierburg GmbH, 41460 Neuss (DE)
(72) Erfinder: Haushälter, Peter, 41065, Mönchengladbach (DE); Prinz, Helmut, 41462, Neuss (DE); Benra, Michael, 44577, Castrop-Rauxel (DE)
(74) Vertreter: Patentanwälte ter Smitten

(56) Entgegenhaltungen:
- EP-A- 1 724 869
- EP-A- 1 746 337
- WO-A-2009/112178
- JP-A- 2007 123 158
- JP-A- 2007 247 421

## Beschreibung

Die Erfindung betrifft einen Anodengaskreislauf eines Brennstoftzellensystems mit einer Rückführleitung, welche von einem Anodengasausgang eines Brennstoffzellenstapels über eine Rezirkulationspumpe zu einem Anodengaseingang des Brennstoffzellenstapels führt sowie ein Verfahren zum Einschalten und Abschalten eines Anodengaskreislaufs eines Brennstoffzellensystems, in dem über eine Rückführleitung mittels einer Reziriculationspumpe Anodengas von einem Anodengasausgang eines Brennstoffzellenstapels zu einem Anodengaseingang des Brennstoffzellenstapels gefördert wird.

Brennstoffzellensysteme sind allgemein bekannt. Sie dienen zur Umwandlung von chemischer Reaktionsenergie eines kontinuierlich zugeführten Brennstoffes, insbesondere Wasserstoff und eines Oxidationsmittels, zumeist Sauerstoff, in elektrische Energie, die beispielsweise als Antriebsenergie für Fahrzeuge verwendet werden kann.

Des Weiteren sind Anodengaskreisläufe bekannt, mittels derer Anodenabgase, die hauptsächlich aus noch nicht verbrauchtem Wasserstoff, Stickstoff und Wasserdampf bestehen, erneut dem Brennstoffzellenstapel zugeführt werden können. Es wird eine deutlich verbesserte Ausnutzung des als Brennstoff dienenden Wasserstoffs erreicht. Zur Förderung dieser Anodengase dient ein Rezirkulationsgebläse, welches die Anodengase über eine Rückführleitung von einem Anodengasausgang des Brennstoffzellenstapels zu einem Anodengaseingang des Brertnstoffzellenstapels fördert.

Derartige Rezirkulationsgebläse werden zumeist als von einem Elektromotor angetriebene Seitenkanalverdichter ausgeführt, deren Bauteile bei einer Verwendung als Wasserstoffgebläse aufgrund des aggressiven Mediums in besonderer Weise abgedichtet werden müssen. Auch werden diese Seitenkanalverdichter üblicherweise mit besonders kleinen Spalten ausgeführt, um einen möglichst hohen Wirkungsgrad zu erreichen. Ein für die Förderung von Wasserstoff geeignetes Gebläse ist beispielsweise aus der DE 103 01 613 A1 bekannt.

Im Anodengaskreislauf, insbesondere bei so genannten PEM-Brennstoffzellensystemen, die mit Wasserstoff als Brennstoff versorgt werden, fällt üblicherweise Wasser in Form von Feuchtigkeit oder Kondensat an. Dieses Wasser entsteht bei der Reaktion vom Wasserstoff mit Luftsauerstoff, der der Kathodenseite der Brennstoffzelle zugeführt wird und somit bei dem Vorgang, der zur Stromerzeugung notwendig ist. Auch ist eine Befeuchtung der Anodengase der Brennstoffzelle erwünscht.

Bei Temperaturen unter dem Gefrierpunkt von Wasser besteht jedoch die Gefahr, dass das Wasser sich nach dem Abschalten des Rezirkulatlonsgebläses in den Spalten zwischen feststehenden und sich drehenden Bauteilen des Rezirkulationsgebläses absetzt und dort gefriert, was zu einem Blockieren des Gebläses führen würde.

So ist aus der DE 103 14 820 A1 ein Verfahren zum Verhindern eines Einfrierens von Wasser im Anodengaskreislauf eines Brennstoffzellensystems bekannt, bei dem beim Abschalten des Anodengaskreislaufs dieser mit trockenem Spülgas durchgespült wird, um eine dort vorhandene Wassermenge auszutreiben. Als Spülgas wird beispielsweise trockene Drucklwft verwendet, die über eine zusätzliche Leitung und ein geeignetes Fördermittel in den Anodengaskreislauf gefördert werden muss. Zusätzlich ist eine Einheit zum Entfeuchten dieser Luft oder ein Vorratsbehälter zum Transport dieser Luft notwendig. Insbesondere bei mobilen Brennstoffzellensystemen erhöht dies unnötig die Anzahl und das Gewicht der vorhandenen Bauteile.

Ferner wird in der JP 2007 123158 A und der EP 1 746 337 A ein Anodengaskreislauf eines Brennstoffzellensystems mit einer Rezirkulationspumpe offenbart, bei denen in der Rückführleitung jeweils vor und hinter der Rezirkulationspumpe ein verschließbares Ventil angeordnet ist. Ein Einfrieren der Ventile und des Gebläses kann aufgrund der vorhandenen Rohrleitungen nicht verhindert werden.

Es ist daher Aufgabe der Erfindung, ein Anodengaskreislauf für ein Brennstoffzellsystem sowie ein Verfahren zum Ein- und Abschalten eines derartigen Anodengaskreislaufs zur Verfügung zu stellen, mit dem ein Festfrieren der sich drehenden Bauteile des Rezirkulationsgebläses vermieden werden kann, wobei die Anzahl und Komplexität der zu verwendenden Bauteile und somit das Gesamtgewicht des Brennstofftellsystems im Vergleich zu bekannten Ausführungen minimiert werden sollen.

Diese Aufgabe wird durch eine Vorrichtung gelöst, bei der in der Rückführleitung in Strömungsrichtung des Anodengases vor und hinter dem Rezirkulationsgebläse jeweils ein Ventil angeordnet ist, über das der Querschnitt der Rückführleitung verschließbar ist und wobei die Ventile mit dem Rezirkulationsgebläse eine Baueinheit bilden und durch ein Verfahren gelöst, bei dem ein vor dem Rezirkulationsgebläse angeordnetes Ventil und ein hinter dem Rezirkulationsgebläse angeordnetes Ventil beim Abschalten des Rezirkulationsgebläses in ihre Schließstellung bewegt werden und beim Einschalten des Rezirkulationsgebläses in ihre Öffnungsstellung bewegt werden. Mit einer derartigen Vorrichtung beziehungsweise einem derartigen Verfahren wird es möglich, ein zusätzliches Eindringen von Feuchtigkeit ins Rezirkulationsgebläse und somit zusätzliche Kondensatbildung am Rezirkulationsgebläse zu verhindern, so dass auch bei einem Gefrieren des Wassers bei Temperaturen unter dem Gefrierpunkt der zuverlässige Betrieb des Rezirkulationsgebläses sichergestellt ist. Der Aufwand zur Bereitstellung einer derartigen Sicherung gegen ein Einfrieren des Rezirkulationsgebläses ist im Vergleich zu bekannten Ausführungen gering.

In einer bevorzugten Ausführungsform der erfindungsgemäßen Vorrichtung ist in unmittelbarer Nähe zu den Ventilen ein Heizelement angeordnet, wobei in einer Weiterführung des Verfahrens vor dem Einschalten des Rezirkulationsgebläses die Ventile mittels Heizelementen über den Gefrierpunkt aufgeheizt werden. Sich an den Ventilen ansammelndes und gefrierendes Kondensat, welches nicht zum Rezirkulationsgebläse gelangen kann, wird durch die Heizelemente an den Ventilen aufgetaut, so dass auch eine zuverlässige Funktion der Ventile sichergestellt wird.

Vorzugsweise sind die Ventile in einer gemeinsamen Ebene angeordnet und über einen gemeinsamen Aktuator betätigbar, so dass die Anzahl der zu verwendenden Bauteile zusätzlich reduziert wird, wobei gleichzeitig ein synchrones Öffnen der Ventile am Einlass und am Auslass des Rezirkulationsgebläses sichergestellt wird.

In einer weiterführenden Ausführungsform dieses Anodengaskreislaufs ist die gemeinsame Ebene in einem Gehäuse des Rezirkulationsgebläses angeordnet, in dem ein Einlasskanal und ein Auslasskanal ausgebildet sind. Eine derartige Ausführung vereinfacht die Montage des Anodengaskreislaufs, da das Rezirkulationsgebläse mit den Ventilen als Baueinheit in den Kreislauf eingesetzt werden kann, stellt sicher, dass die Ventile in ausreichender Nähe zum Rezirkulationsgebläse angeordnet sind und verringert den Bauteile- und Montageaufwand der Ventileinheit am Gehäuse des Gebläses.

In einer bevorzugten Ausführung sind die Ventile als drehbewegliche Klappen ausgebildet, die jeweils auf einer drehbaren Welle angeordnet sind. Auch dies birgt Vorteile bei der Herstellung und Montage, wobei diese Klappen insbesondere in Bereichen größerer Durchströmungsquerschnitte verteilhaft zu verwenden sind.

Zur besonders einfachen Betätigung ist auf den Enden der Wellen jeweils ein Zahnrad angeordnet, wobei die beiden Zahnräder mit einer Zahnstange in Eingriff stehen, die über den Aktuator betätigbar ist.

Da es ausreichend ist, wie vorgesehen die Klappen als Auf-Zu-Ventile auszuführen ist der Aktuator vorzugsweise als Hubmagnet ausgeführt. Ein solcher Hubmagnet ist kostengünstig, einfach anzusteuern und bezüglich seiner Endstellungen sehr genau, so dass ein zuverlässiger Verschluss des Anodengaskreislauf vor und hinter dem Rezirkulationsgebläse nach dem Abschalten desselben sichergestellt wird.

Vorteilhafterweise ist der Hubmagnet durch einen Faltenbalg gegen das Innere des Gehäuses abgedichtet. Hierdurch wird ein Eindringen von Wasserstoff oder Wasser in den Hubmagneten zuverlässig vermieden, wodurch die Lebensdauer des Aktuators deutlich erhöht wird.

Es wird somit ein Anodengaskreislauf und ein Verfahren zum Einschalten und Abschalten eines derartigen Anodengaskreislaufs geschaffen, mit dem ein Einfrieren des Rezirkulatlonsgebläses zuverlässig vermieden wird, wobei die Anzahl und Komplexität der verwendeten Bauteile minimiert werden, so dass gleichzeitig das Gesamtgewicht des Anodengaskreislaufes verringert wird.

Eine erfindungsgemäße Ausführung ist in den Figuren dargestellt und wird nachfolgend beschrieben.
Figur 1 zeigt schematisch einen erfindungsgemäßen Anodengaskreislauf an einem Brennstoffzellensystem.
Figur 2 zeigt eine Draufsicht auf eine Flanschebene eines Rezirkulationsgebläses eines erfindungsgemäßen Anodengaskreislaufs in geschnittener Darstellung.

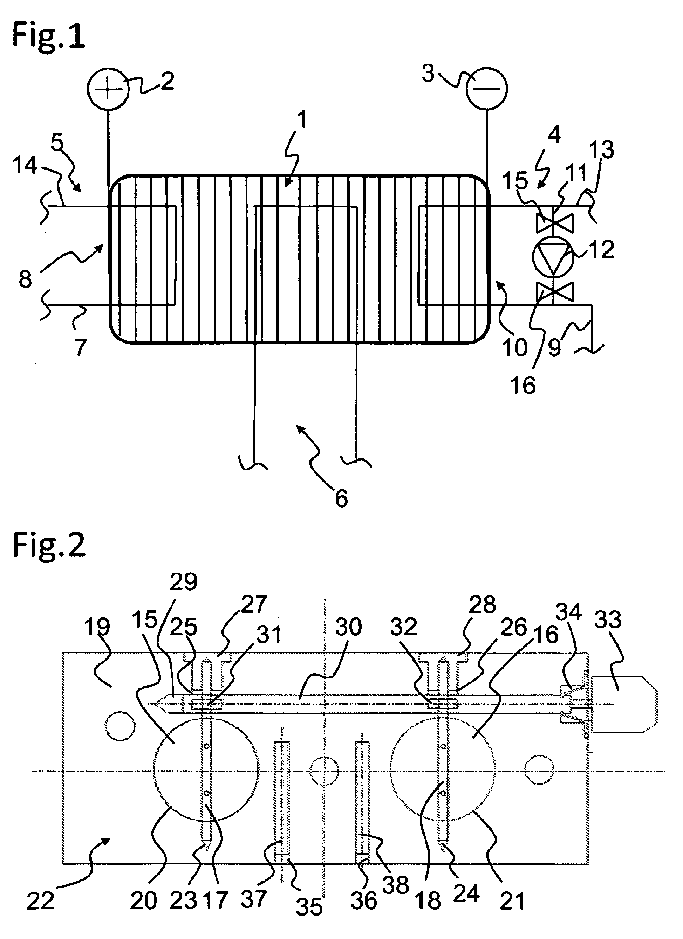

In der Figur 1 ist ein Brennstoffzellenstapel 1 mit einer Kathode 2 und einer Anode 3 dargestellt. Dieser Brennstoffzellenstapel 1 ist an einen Anodengaskreislauf 4, einen Kathodengaskreislauf 5 sowie ein Kühlkreislauf 6 angeschlossen.

Die für die Erfindung nicht wesentlichen Teile der drei Kreisläufe 4, 5, 6 sind in der Figur nicht dargestellt werden jedoch kurz beispielhaft anhand eines üblichen Aufbaus eines PEM-Brennstoffzellensystems beschrieben. Der Kathodengaskreislauf kann beispielsweise aus einem Kompressor bestehen, der über einen Elektromotor angetriebenen wird und Luft über eine Leitung 7 zur Kathodenseite 8 des Brennstoffzellenstapels 1 fördert. Gleichzeitig wird im Anodengaskreislauf 4 komprimierter Wasserstoff aus einem Tieftemperaturspeicher über ein Druckreduzierventil und ein Steuerventil über eine Leitung 9 der Anodenseite 10 des Brennstoffzellenstapels 1 zugeführt.

Auf der Anodenseite 10 wird der Wasserstoff katalytisch oxidiert und dabei unter Abgabe von Elektronen in Protonen umgewandelt. Die Elektronen werden aus der Brennstoffzelle abgeleitet und fließen über einen elektrischen Verbraucher, wie beispielsweise einen Elektromotor zum Antrieb eines Kraftfahrzeugs, zur Kathode. An der Kathode wird das Oxidationsmittel, im vorliegenden Beispiel Sauerstoff aus der Luft, durch Aufnahme der Elektronen zu Anionen reduziert. Gleichzeitig diffundieren die Protonen durch die Protonenaustauschmembran zwischen den Brennstoffzellen zur Kathode und reagieren mit dem reduzierten Sauerstoff zu Wasserdampf. Bei diesen Reaktionen entsteht eine elektrische Leistung, die über die Kathode 2 und die Anode 3 abgenommen werden kann.

Bei diesen Reaktionen wird der zur Verfügung gestellte Wasserstoff nicht vollständig verbraucht, so dass über eine Rückführleitung 11 die anodenseitigen Abgase erneut der Anodenseite 10 zugeführt werden können. Hierzu ist in der Rückführleitung 11 ein Rezirkulationsgebläse 12 angeordnet, welches üblicherweise als Seitenkanalgebläse ausgeführt ist.

Die nicht zurückgeführten Abgase der Anodenseite 10, welche aus nicht verbrauchtem Wasserstoff, Stickstoff und Wasserdampf bestehen, werden über eine Auslassleitung 13 und ein Ablassventil einem katalytischen Brenner zugeführt, in dem unter Zugabe von Sauerstoff der noch vorhandene Wasserstoff in Wasser umgewandelt wird, welches anschließend mit dem Stickstoff in die Umgebung abgeführt werden kann.

Die Abgase der Kathodenseite 8 werden über eine Auslassleitung 14 und ein Ventil zur Betriebsdrucksteuerung zunächst einer Abtrenneinrichtung zum Abtrennen von Wasser aus dem Abgas zugeführt und anschließend der nicht verbrauchte Luftsauerstoff und Stickstoff in die Umgebung abgelassen.

Der Kühlkreislauf 6 kann auf sehr unterschiedliche Weise ausgeführt werden, wobei sowohl eine Luftkühlung als auch eine Flüssigkeitskühlung realisierbar sind. Entsprechend wird auf eine ausführliche Beschreibung des Kühlkreislaufs verzichtet.

Nach dem Abschalten des Brennstoffzellensystems kondensiert üblicherweise der Anodengaskreislauf 4 vorhandene Wasserdampf an den Rohrleitungen und gegebenenfalls im Rezirkulatlonsgebläse 12. Bei Außentemperaturen unter dem Gefrierpunkt des Wassers wird dieses entsprechend im Bereich der engen Spalte zwischen sich drehenden und feststehenden Bauteilen des Rezirkulationsgebläse 12 gefrieren und somit das Rezirkulationsgebläse 12 festsetzen.

Aus diesem Grund sind unmittelbar vor und hinter dem Rezirkulationsgebläse 12 Ventile 15, 16 angeordnet, welche unmittelbar nach dem Abschalten des Brennstoffzellsnsystems und der Rezirkulationspumpe 12 geschlossen werden. Das sich nun innerhalb der Leitungen nach dem Abschalten bildende Kondensat kann nicht mehr über die Rohrleitungen zum Rezirkulationsgebläse 12 fließen, sondern setzt sich an den Ventilen 15, 16 ab.

Eine bevorzugte Ausführungsform dieser Ventile 15, 16 und deren Anordnung ist in der Figur 2 dargestellt, weiche nachfolgend beschrieben wird. Die Ventile 15, 16 sind hier in Form von um ihre Mittelachse schwenkbaren Klappen ausgebildet, die jeweils auf einer drehbaren Welle 17, 18 befestigt sind.

Das Rezirkulationsgebläse 12 weist ein Gehäuse 19 mit einem Einlasskanal 20 und einem Auslasskanal 21 auf, welche eine gemeinsame Ebene 22 aufweisen, in der die Klappen 15, 16 gelagert sind. Entsprechend bilden die Klappen 15, 16 eine Baueinheit mit dem Rezirkulationsgebläse 12. Die Figur 2 zeigt eine Draufsicht auf diese gemeinsame Ebene 22.

Während ein erstes Ende der Wellen 17, 18 jeweils in Sackbohrungen 23, 24 gelagert ist, ist deren entgegengesetztes zweites Ende jeweils in einer Durchgangsbohrung 25, 26 im Gehäuse 19 gelagert, wobei die Durchgangsbohrungen 25, 26 durch Lagerdeckel 27, 28 verschlossen werden, so dass ein Austritt von Wasserstoff aus dem Gehäuse 19 zuverlässig vermieden wird. In der Ebene 22, senkrecht zu den beiden parallelen Durchgangsbohrungen 25, 26 ist eine weitere Bohrung 29 im Gehäuse 19 ausgebildet, in der eine Zahnstange 30 geführt wird, die mit zwei Zahnräder 31, 32 in Eingriff steht, die auf den zweiten Enden der Wellen 17, 18 zumindest drehfest angeordnet sind. Die Zahnstange 30 ist mit einem Aktuator 33 verbunden, der vorteilhafterweise, wie in Figur 2 dargestellt, als Hubmagnet 33 ausgeführt ist. Der Hubmagnet 33 ist am Gehäuse 19 unter Zwischenlage eines ersten Endes eines Faltenbalges 34 befestigt, wobei das zweite axiale Ende des Faltenbalges 34 die Zahnstange 30 über ihren gesamten Umfang umgreift. Hierdurch wird wiederum ein Austreten von Wasserstoff aus dem Einlasskanal 20 oder den Auslasskanal 21 über die Bohrung 29 in die Umgebung zuverlässig vermieden. Durch Betätigung des Hubmagneten 33 wird dessen lineare Bewegung In eine rotatorische Bewegung der Klappen 15,16 über die Zahnräder 31,32 umgewandelt.

Zusätzlich sind in der Ebene 22 zwei weitere Bohrungen 35, 36 ausgebildet, in denen Heizelemente 37, 38 in Form von Heizpatronen jeweils in der Nähe der Klappen 15,16 angeordnet sind. Diese Heizpatronen 37, 38 dienen der Verflüssigung von gefrorenem Wasser, welches sich nach dem Ausschalten des Brennstoffzellensystems als Kondensat an den Klappen 15, 16 absetzt und bei Temperaturen unter dem Gefrierpunkt die Klappen 15, 16 vor dem Start festsetzen könnte. Somit wird die Funktion der Klappen 15, 16 auch bei Minustemperaturen zuverlässig sichergestellt.

Vor dem Start des Brennstoffzellensystems beziehungsweise des Anodengaskreislaufs werden zunächst die Heizelemente 37, 38 und durch die Heizelemente 37, 38 die Klappen 15, 16 aufgewärmt, so dass das an den Klappen 15, 16 gesammelte Wasser verflüssigt wird und die Klappen 15, 16 ohne größere Kräfte über den Hubmagneten 33, die Zahnstange 30 und die Zahnrädern 31, 32 geöffnet werden können. Daraufhin wird das Rezirkulationsgebläse 12 gestartet. Beim Abschalten des Rezirkulationsgebläses 12 werden etwa gleichzeitig die Klappen 15, 16 wiederum durch Betätigung des Hubmagneten 33 geschlossen, so dass bei der folgenden Abkühlung des Systems das sich sammelnde Kondenswasser von den Rohrleitungen 9, 11, 13 nicht in das Rezirkulationsgebläse 12 eindringen kann, sondern sich an den Klappen 15, 16 sammelt. Bei Temperaturen unter dem Gefrierpunkt wird dieses Wasser auch nur an den Klappen 15, 16 gefrieren und kann beim Starten über die Heizelemente 37, 38 zur zuverlässigen Funktion des Anodengaskreislaufs 4 zunächst wieder an den Klappen 15, 16 verflüssigt werden.

Es wird somit ein Anodenkreislauf für ein Brennstoffzellensystem sowie ein Verfahren zum Ein- und Abschalten eines Anodengaskreislaufs geschaffen, mit dem ein Festfrieren der sich drehenden Bauteile des Rezirkulationsgebläses vermieden wird, da ein Eindringen von Kondenswasser durch die Klappen verhindert wird. Deren Funktion wird im Folgenden durch ein Aufheizen sichergestellt. Diese Vorrichtung ist im Vergleich zu bekannten Ausführungen deutlich weniger komplex aufgebaut und einfach zu steuern.

Es sollte deutlich sein, dass verschiedene konstruktive Änderungen innerhalb des Schutzbereiches des Hauptanspruches möglich sind. So können statt der dargestellten Klappen auch andere Ventile verwendet werden. Auch könnten die Klappen statt in einem Flanschbereich des Gebläses in den Rohrleitungen unmittelbar vor oder hinter dem Gebläse angeordnet sein. Selbstverständlich sind auch unterschiedliche Arten von Getrieben oder Aktuatoren denkbar.

## Patentansprüche

1. Anodengaskreislauf eines Brennstoffzellensystems mit
einer Rückführleitung, welche von einem Anodengasausgang eines Brennstoffzellenstapels über eine Rezirkulationspumpe zu einem Anodengaseingang des Brennstoffzellenstapels führt,
**dadurch gekennzeichnet, dass**
in der Rückführleitung (11) in Strömungsrichtung des Anodengases vor und hinter dem Rezirkulationsgebläse (12) jeweils ein Ventil (15, 16) angeordnet ist, über das der Querschnitt der Rückführleitung (11) verschließbar ist, und wobei die Ventile (15, 16) mit dem Rezirkulationsgebläse (12) eine Baueinheit bilden.

2. Anodengaskreislauf eines Brennstoffzellensystems nach Anspruch 1,
**dadurch gekennzeichnet, dass**
in unmittelbarer Nähe zu den Ventilen (15, 16) ein Heizelement (37, 38) angeordnet ist.

3. Anodengaskreislauf eines Brennstoffzellensystems nach Anspruch 1 oder 2,
**dadurch gekennzeichnet, dass**
die Ventile (15, 16) in einer gemeinsamen Ebene (22) angeordnet und über einen gemeinsamen Aktuator (33) betätigbar sind.

4. Anodengaskreislauf eines Brennstoffzellensystems nach Anspruch 3,
**dadurch gekennzeichnet, dass**
die gemeinsame Ebene (22) in einem Gehäuse (19) des Rezirkulationsgebläses (12) angeordnet ist, in dem ein Einlasskanal (20) und ein Auslasskanal (21) ausgebildet sind.

5. Anodengaskreislauf eines Brennstoffzellensystems nach einem der vorhergehenden Ansprüche,
**dadurch gekennzeichnet, dass**
die Ventile (15, 16) als drehbewegliche Klappen ausgebildet sind, die jeweils auf einer Welle (17, 18) angeordnet sind.

6. Anodengaskreislauf eines Brennstoffzellensystems nach Anspruch 5,
**dadurch gekennzeichnet, dass**
auf den Enden der Wellen (17, 18) jeweils ein Zahnrad (31, 32) angeordnet ist, wobei die beiden Zahnräder (31, 32) mit einer Zahnstange (30) in Eingriff stehen, die über den Aktuator (33) betätigbar ist.

7. Anodengaskreislauf eines Brennstoffzellensystems nach einem der Ansprüche 3 bis 6,
**dadurch gekennzeichnet, dass**
der Aktuator (33) als Hubmagnet ausgeführt ist.

8. Anodengaskreislauf eines Brennstoffzellensystems nach Anspruch 7,
**dadurch gekennzeichnet, dass**
der Hubmagnet (33) durch einen Faltenbalg (34) gegen das Innere des Gehäuses (19) abgedichtet ist.

9. Verfahren zum Einschalten und Abschalten eines Anodengaskreislaufs eines Brennstoffzellensystems, in dem über eine Rückführleitung mittels einer Rezirkulatlonspumpe Anodengas von einem Anodengasausgang eines Brennstoffzellenstapels zu einem Anodengaseingang des Brennstoffzellenstapels gefördert wird,
**dadurch gekennzeichnet, dass**
ein vor dem Rezirkulationsgebläse (12) angeordnetes Ventil (15) und ein hinter dem Rezirkulationsgebläse (12) angeordnetes Ventil (16) beim Abschalten des Rezirkulationsgebläses (12) in ihre Schließstellung bewegt werden und beim Einschalten des Rezirkulationsgebläses (12) in ihre Öffnungsstellung bewegt werden.

10. Verfahren zum Einschalten und Abschalten eines Anodengaskreislaufs eines Brennstoffzellensystems nach Anspruch 9,
**dadurch gekennzeichnet, dass**
vor dem Einschalten des Rezlrkulationsgebläses (12) die Ventile (15, 16) mittels Heizelementen (37, 38) über den Gefrierpunkt aufgeheizt werden.

## Claims

1. An anode gas circuit of a fuel cell system, comprising
a recirculation line leading from an anode outlet of a fuel cell stack to an anode inlet of the fuel cell stack via a recirculation pump,
**characterized in that**
a respective valve (15, 16) is arranged in the recirculation line (11) upstream and downstream of the recirculation fan (12), seen in the flow direction of the anode gas, by means of which valves the cross section of the recirculation line (11) can be closed, and wherein the valves (15, 16) form a structural unit with the recirculation fan (12).

2. The anode gas circuit of a fuel cell system of claim 1, **characterized in that** a heating element (37, 38) is provided in the immediate vicinity of the valves (15, 16).

3. The anode gas circuit of a fuel cell system of claim 1 or 2, **characterized in that** the valves (15, 16) are arranged in a common plane and are actuatable via a common actuator (33).

4. The anode gas circuit of a fuel cell system of claim 3, **characterized in that** said common plane (22) is provided in a housing (19) of the recirculation fan (12), in which housing are formed an inlet channel (20) and an outlet channel (21).

5. The anode gas circuit of one of the preceding claims, **characterized in that** said valves (15, 16) are configured as rotatable flaps, each arranged on a shaft (17, 18).

6. The anode gas circuit of a fuel cell system of claim 5, **characterized in that** a respective gearwheel (31, 32) is arranged at the ends of said shafts (17, 18), said two gearwheels (31, 32) meshing with a toothed rack (30) actuatable via the actuator (33).

7. The anode gas circuit of a fuel cell system of one of claims 3 to 6, **characterized in that** the actuator (33) is a lifting magnet.

8. The anode gas circuit of a fuel cell system of claim 7, **characterized in that** said lifting magnet (33) is sealed against the interior of the housing (10) by means of a bellows (34).

9. A method for starting and stopping an anode gas circulation of a fuel cell system, in which anode gas is transported by means of a recirculation pump from an anode outlet of a fuel cell stack to an anode inlet of the fuel cell stack via a recirculation line, **characterized in that** a valve (15) located upstream of the recirculation fan (12) and a valve (16) located downstream of the recirculation fan (12) are moved to their closed positions when the recirculation fan (12) is stopped, and are moved to their open positions when the recirculation fan (12) is started.

10. A method for starting and stopping an anode gas circulation of a fuel cell system of claim 9, **characterized in that** prior to starting the recirculation fan (12), the valves (15, 16) are heated to a temperature beyond freezing by means of heating elements (37, 38).

## Revendications

1. Circuit de circulation de gaz anodique d'un système de pile à combustible, comprenant un conduit de récirculation menant d'une sortie d'anode d'un pile à combustible à travers une pompe de récirculation jusqu'à une entrée d'anode dudit pile à combustible,
**caractérisé en ce que**
dans le conduit de récirculation (11), une soupape (15, 16) respective est positionnée en amont et en aval d'un souffleur de récirculation (12), vu dans la direction d'écoulement dudit gaz anodique, lesdites soupapes permettant à fermer la section dudit conduit de récirculation (11), et lesdites soupapes (15, 16) formant une unité structurelle avec ledit souffleur de récirculation (12).

2. Circuit de circulation de gaz anodique d'un système de pile à combustible selon la revendication 1, **caractérisé en ce qu'**un élément de chauffage (37, 38) est disposé à proximité immédiate desdites soupapes (15, 16).

3. Circuit de circulation de gaz anodique d'un système de pile à combustible selon les revendications 1 ou 2, **caractérisé en ce que** lesdites soupapes (15, 16) sont prévues dans un plan (22) commun et sont actionnables par un actionneur (33) commun.

4. Circuit de circulation de gaz anodique d'un système de pile à combustible selon la revendication 3, **caractérisé en ce que** ledit plan commun (22) est disposé dans un boitier (19) dudit souffleur de récirculation (12), dans lequel sont formés un conduit d'entrée (20) et un conduit de sortie (21).

5. Circuit de circulation de gaz anodique d'un système de pile à combustible selon l'une quelconque des revendications précédentes, **caractérisé en ce que** lesdites soupapes (15, 16) sont configurées comme clapets aptes à tourner qui sont respectivement disposées sur un arbre (17, 18).

6. Circuit de circulation de gaz anodique d'un système de pile à combustible selon la revendication 5, **caractérisé en ce qu'**une roue dentée (31, 32) respective est disposée aux extrémités des arbres (17, 18), les deux roues dentées (31, 32) étant en prise avec une crémaillère (30) actionnable par le biais de l'actionneur (33).

7. Circuit de circulation de gaz anodique d'un système de pile à combustible selon l'une quelconque des revendications 3 à 6, **caractérisé en ce que** l'actionneur (33) est un solénoïde de levée.

8. Circuit de circulation de gaz anodique d'un système de pile à combustible selon la revendication 7, **caractérisé en ce que** ledit solénoïde de levée (33) est étanchéifié contre l'intérieur du boitier (19) par un soufflet (34).

9. Procédé de démarrer et d'arrêter la circulation de gaz anodique d'un système de pile à combustible, dans lequel un gaz anodique est transporté par une pompe de récirculation à partir d'une sortie d'anode d'un pile à combustible à travers un conduit de récirculation jusqu'à une entrée d'anode dudit pile à combustible, **caractérisé en ce qu'**une soupape (15) située en amont dudit souffleur de récirculation (12) et une soupape (16) située en aval dudit souffleur de récirculation (12) sont déplacées dans leur position fermée lors de l'arrêt du souffleur de récirculation (12) et sont déplacées dans leur position ouverte lors du démarrage dudit souffleur de récirculation (12).

10. Procédé de démarrer et d'arrêter la circulation de gaz anodique d'un système de pile à combustible selon la revendication 8, **caractérisé en ce qu'**avant le démarrage dudit souffleur de récirculation (12), les soupapes (15, 16) sont chauffées au-delà du point de congélation par des éléments de chauffage (37, 38).
